# EUROPÄISCHE PATENTSCHRIFT

(11) **EP 3 924 577 B1**
(45) Veröffentlichungstag und Bekanntmachung des Hinweises auf die Patenterteilung: **26.07.2023**
(21) Anmeldenummer: 20705323.2
(22) Anmeldetag: 10.02.2020
(51) Int. Cl.: E04H 12/08, E04H 12/12, F03D 13/20, E04H 12/16

(54) **HYBRID-TURMABSCHNITT, HYBRID-TURM FÜR EINE WINDENERGIEANLAGE SOWIE HERSTELLUNGSVERFAHREN**
HYBRID TOWER SECTION, HYBRID TOWER FOR A WIND POWER PLANT AND METHOD OF PRODUCTION
SEGMENT DE TOUR HYBRIDE, TOUR HYBRIDE POUR UNE ÉOLIENNE ET PROCÉDÉ DE FABRICATION

(30) Priorität: 13.02.2019 DE 102019103589
(43) Veröffentlichungstag der Anmeldung: 22.12.2021
(73) Patentinhaber: Wobben Properties GmbH, 26607 Aurich (DE)
(72) Erfinder: HÖLSCHER, Norbert, 26607 Aurich (DE)
(74) Vertreter: Eisenführ Speiser
(86) Internationale Anmeldenummer: PCT/EP2020/053361
(87) Internationale Veröffentlichungsnummer: WO 2020/165105

(56) Entgegenhaltungen:
- WO-A1-2011/157659
- WO-A1-2013/110448
- CN-A- 103 994 034
- DE-A1-102016 125 062

## Beschreibung

Die Erfindung betrifft einen Hybrid-Turmabschnitt zur Anordnung zwischen einem Beton-Turmabschnitt und einem Stahl-Turmabschnitt eines Hybrid-Turms für eine Windenergieanlage. Die Erfindung betrifft ferner einen Hybrid-Turm für eine Windenergieanlage, eine Windenergieanlage ein Verfahren zur Herstellung eines Hybrid-Turmabschnitts und ein Verfahren zur Herstellung eines Hybrid-Turms für eine Windenergieanlage. Es ist bekannt, für Windenergieanlagen Hybrid-Türme einzusetzen. Ein Hybrid-Turm bezeichnet in der Regel einen Turm, der einen Beton-Turmabschnitt und einen Stahl-Turmabschnitt umfasst. Meist ist der Beton-Turmabschnitt ein im Betriebszustand der Windenergieanlage unterer Turmabschnitt, wohingegen der Stahl-Turmabschnitt im Betriebszustand der Windenergieanlage ein oberer Turmabschnitt ist. Eine Herausforderung bei Hybrid-Türmen für Windenergieanlagen stellt der Übergang von Beton-Turmabschnitt zum Stahl-Turmabschnitt.

WO 2011/157659 A1 offenbart ein Verfahren zur Herstellung eines Turms einer Windenergieanlage bei dem zumindest ein rohrförmiger Turmabschnitt aus aufeinander angeordneten ringförmigen Betonfertigteilen mit zwei horizontalen Kontaktflächen hergestellt wird. WO 2013/110448 A1 offenbart einen Hybridturm mit einem unteren, aus Betonfertigteilen zusammengesetzten, über Spannlitzen verspannten rohrförmigen unteren Turmabschnitt und einem aus Stahl bestehenden, rohrförmigen oberen Turmabschnitt sowie mit einem zwischen den beiden Turmabschnitten angeordneten Adapter zum Verbinden der Turmabschnitte. DE 102016125062 A1 offenbart einen Windenergieanlagen-Turm, der eine Mehrzahl von Turmsegmenten aufweist, welche aufeinander platziert sind. CN 103994034 A offenbart eine Verbindungsvorrichtung für eine Kombination aus Spannbeton und Stahl für einen Windkraftturm.

Das Deutsche Patent- und Markenamt hat in der Prioritätsanmeldung zur vorliegenden Anmeldung folgenden Stand der Technik recherchiert: DE 10 2010 039 796 A1, DE 10 2016 114 114 A1, DE 10 2016 125 062 A1, DE 10 2013 211 750 A1.

Es ist daher eine Aufgabe der vorliegenden Erfindung, einen Hybrid-Turmabschnitt, einen Hybrid-Turm, eine Windenergieanlage, ein Verfahren zur Herstellung eines Hybrid-Turmabschnitts und ein Verfahren zur Herstellung eines Hybrid-Turms bereitzustellen, welche gegen über existierenden Lösungen verbessert sind. Ferner ist es eine Aufgabe der vorliegenden Erfindung, einen Hybrid-Turmabschnitt, einen Hybrid-Turm, eine Windenergieanlage, ein Verfahren zur Herstellung eines Hybrid-Turmabschnitts und ein Verfahren zur Herstellung eines Hybrid-Turms bereitzustellen, welche eine kostengünstige und zuverlässige Lösung für den Übergang von einem Beton-Turmabschnitt zu einem Stahl-Turmabschnitt ermöglichen.

Diese Aufgabe wird gelöst durch einen Hybrid-Turmabschnitt zur Anordnung zwischen einem Beton-Turmabschnitt und einem Stahl-Turmabschnitt eines Hybrid-Turms für eine Windenergieanlage, der Hybrid-Turmabschnitt umfassend: einen Stahlflansch mit einer Vielzahl von ringförmig angeordneten Sacklöchern und einer Vielzahl von ringförmig angeordneten Durchgangslöchern, einen Stahl-Außenmantel und einen Betonkern, wobei die ringförmige Anordnung der Sacklöcher einen größeren Radius aufweist als die ringförmige Anordnung der Durchgangslöcher, wobei der Stahl-Außenmantel einen größeren Radius aufweist als die ringförmige Anordnung der Sacklöcher, wobei der Betonkern an den Stahlflansch und den Stahl-Außenmantel angrenzt und eine radial innen liegende Seite des Betonkerns einen größeren Radius aufweist als die ringförmige Anordnung der Durchgangslöcher.

Der Hybrid-Turmabschnitt dient insbesondere auch dazu, Spannglieder an ihrem im Betriebszustand oberen Ende zu befestigen. Mit solchen Spanngliedern wird in der Regel ein Beton-Turmabschnitt vorgespannt, wobei die Spannglieder an einem oberen Ende des Beton-Turmabschnitts und einem unteren Ende des Beton-Turmabschnitts oder an einem Fundament des Turms befestigt sind. Insbesondere können in den ringförmig angeordneten Durchgangslöchern des Stahlflansches des Hybrid-Turmabschnitts solche Spannglieder angeordnet und befestigt werden. Daneben weist der Stahlflansch eine Vielzahl von ringförmig angeordneten Sacklöchern auf. Diese ringförmig angeordneten Sacklöcher können insbesondere dazu dienen, Befestigungselemente, wie beispielsweise Gewindebolzen, aufzunehmen, die den Stahlflansch des Hybrid-Turmabschnitts mit einem Stahl-Turmabschnitt, insbesondere einem unteren Ende davon, verbinden.

Die ringförmige Anordnung der Sacklöcher weist einen größeren Radius auf als die ringförmige Anordnung der Durchgangslöcher. Da die Durchgangslöcher vorzugsweise dazu dienen, Spannglieder aufzunehmen, und diese externen Spannglieder vorzugsweise in einem Inneren des Hybrid-Turms verlaufen, ist es bevorzugt, dass die Vielzahl von ringförmig angeordneten Sacklöchern radial außerhalb der Vielzahl von ringförmig angeordneten Durchgangslöchern liegt.

Der Hybrid-Turmabschnitt weist ferner einen Stahl-Außenmantel auf. Der Stahl-Außenmantel erstreckt sich vorzugsweise von einer im Betriebszustand unteren Seite des Stahlflansches aus nach unten. Der Stahl-Außenmantel ist vorzugsweise angeordnet und/oder ausgebildet, eine Außenwand des Hybrid-Turms zu bilden und/oder mit einer Außenlandung eines Beton-Turmabschnitts und/oder eines Stahl-Turmabschnitts zu fluchtend.

Der Stahl-Außenmantel weist einen größeren Radius auf als die ringförmige Anordnung der Sacklöcher. Diese Anordnung ist besonders bevorzugt, wenn der Stahl-Außenmantel einen Teil der Außenwandung des Hybrid-Turms bildet.

Ferner weist der Hybrid-Turmabschnitt einen Betonkern auf. Der Betonkern grenzt sowohl an den Stahlflansch, insbesondere eine im Betriebszustand untere Seite des Stahlflansches, und den Stahl-Außenmantel an, insbesondere an eine radial innen liegende Seite des Stahl-Außenmantels. Eine radial innen liegende Seite des Betonkerns weist einen größeren Radius auf als die ringförmige Anordnung der Durchgangslöcher. Dies ist insbesondere bevorzugt, da die Durchgangslöcher, wie beschrieben, insbesondere zur Anordnung und Befestigung von Spannglieder zur Vorspannung des Beton-Turmabschnitts dienen. Damit die Spannglieder ungehindert im Inneren des Hybrid-Turms verlaufen können, ist es bevorzugt, dass eine radial innen liegende Seite des Betonkerns einen größeren Radius hat als die ringförmige Anordnung der Durchgangslöcher und somit radial außerhalb von den Durchgangslöchern verläuft.

Der hier beschriebene Hybrid-Turmabschnitt hat verschiedene Vorteile. Durch die Kombination der Materialien Stahl und Beton kann ein gegenüber existierenden Lösungen günstiges Gewicht entstehen. Insbesondere gegenüber größtenteils oder vollständig aus Stahl ausgebildeten Übergangs-Turmabschnitten weist der hier beschriebene Hybrid-Turmabschnitt ein geringeres Gewicht auf. Ein weiterer Vorteil ergibt sich dadurch, dass durch den vorzugsweise im Betriebszustand unten liegenden Betonkern eine Stoßverbindung zwischen den Beton-Turmabschnitt und dem Hybrid-Turmabschnitt in vorteilhafter Weise den Reibwert von Beton auf Beton nutzen kann. Beispielsweise werden für den Beton-Turmabschnitt mehrere ringförmige Beton-Turmsektionen aufeinandergesetzt, wobei diese aufeinander gesetzten Beton- Turmsektionen in der Regel alleine über eine Stoßverbindung ohne zusätzliche Verbindungsmittel, wie beispielsweise Epoxidharz, oder andere Verbindungselemente miteinander verbunden sind. Durch die Vorspannung des Beton-Turmabschnitts über die Spannglieder werden die Stoßverbindungen unter Druck gesetzt und bilden somit eine zuverlässige Verbindung.

Der Stahlflansch und/oder der Stahl-Außenmantel und/oder der Betonkern sind vorzugsweise angeordnet und/oder ausgebildet, um insbesondere die von den vorgespannten Spannglieder ausgehenden Kräfte und Momente zuverlässig in einen im Betriebszustand obenliegenden Beton-Turmabschnitt einzuleiten.

Beim Herstellen des Betonkerns ist der Hybrid-Turmabschnitt verglichen mit seinem Einbauzustand vorzugsweise an einer horizontalen Ebene gespiegelt angeordnet. Bei dieser Anordnung ragen der Stahl-Außenmantel vorzugsweise nach oben. Vorzugsweise dient der Stahl-Außenmantel als verlorene Schalung beim Betonnieren des Betonkerns.

Eine weitere bevorzugte Ausführungsform ist gekennzeichnet durch einen Stahl-Innenmantel, wobei der Stahl-Innenmantel einen Radius aufweist, der größer ist als der Radius der ringförmigen Anordnung der Durchgangslöcher und kleiner ist als der Radius der ringförmigen Anordnung der Sacklöcher.

Vorzugsweise weist der Hybrid-Turmabschnitt neben dem Stahl-Außenmantel auch einen Stahl-Innenmantel auf. Auch der Stahl-Innenmantel weist einen größeren Radius auf als die ringförmige Anordnung der Durchgangslöcher, damit deren Eignung zur Aufnahme von Spannglieder nicht beeinträchtigt wird.

Gemäß einer weiteren bevorzugten Ausführungsform ist vorgesehen, dass eine radial innen liegende Seite des Stahl-Außenmantels und/oder eine radial außen liegende Seite des Stahl-Innenmantels eine konturierte Oberfläche und/oder eine, zwei oder mehrere Vorsprünge und/oder Vertiefungen und/oder Schubknaggen aufweisen.

Die Vorsprünge und/oder Vertiefungen und/oder Schubknaggen und/oder die konturierte Oberfläche ragen vorzugsweise in radialer Richtung von der radial innen liegenden Seite des Stahl-Außenmantels und/oder von der radial außenliegenden Seite des Stahl-Innenmantels hervor, beispielsweise in einen zwischen dem Stahl-Außenmantel und dem Stahl-Innenmantel gebildeten Zwischenraum. Eine konturierte Oberfläche kann beispielsweise zahnschnittartig ausgebildet sein, insbesondere in einem Längsschnitt entlang einer Längsachse des Turms

Das Vorsehen einer konturierten Oberfläche und/oder einer, zwei oder mehreren Vorsprüngen und/oder Vertiefungen und/oder Schubknaggen am Stahl-Außenmantel und/oder am Stahl-Innenmantel hat insbesondere den Vorteil, dass sie durch eine Kraftübertragung zwischen dem Stahl-Außenmantel und/oder dem Stahl-Innenmantel und dem Betonkern verbessert wird.

Das Vorsehen sowohl eines Stahl-Außenmantels als auch eines Stahl-Innenmantels hat unter anderem den Vorteil, dass sowohl der Stahl-Außenmantel als auch der Stahl-Innenmantel als verlorene Schalung für das Herstellen des Betonkerns verwendet werden können. Vorzugsweise ist der Hybrid-Turmabschnitt beim Herstellen des Betonkerns gegenüber seinem Betriebszustand an einer horizontalen Ebene gespiegelt angeordnet. Vorzugsweise ragen in dieser Herstellungs-Position des Hybrid-Turmabschnitts der Stahl-Außenmantel und/oder der Stahl-Innenmantel ausgehend vom Stahlflansch nach oben. Auf diese Weise kann fließfähiger Beton in den Zwischenraum zwischen Stahl-Außenmantel und Stahl-Innenmantel eingebracht werden und dort aushärten.

In einer bevorzugten Ausführungsform ist vorgesehen, dass der Stahl-Außenmantel und/oder der Stahl-Innenmantel und/oder der Betonkern eine axiale Höhe aufweisen, die um ein Vielfaches größer ist als eine axiale Höhe des Stahlflansches. Ferner ist bevorzugt, dass der Stahl-Außenmantel und/oder der Stahl-Innenmantel und/oder der Betonkern eine axiale Höhe von 1-2m aufweisen. Es kann ferner bevorzugt sein, dass der Stahl-Außenmantel und/oder der Stahl-Innenmantel und/oder der Betonkern eine radiale Dicke von 1-20cm aufweisen

Ferner ist insbesondere bevorzugt, dass der Betonkern direkt an den Stahl-Außenmantel, insbesondere direkt an die radial innen liegende Seite des Stahl-Außenmantels, angrenzt. In einer bevorzugten Ausführungsform ist vorgesehen, dass der Betonkern direkt an den Stahl-Innenmantel, insbesondere direkt an die radial außenliegende Seite des Stahl-Innenmantels, angrenzt. Ferner ist bevorzugt, dass der Betonkern direkt an den Stahlflansch, insbesondere direkt an eine im Betriebszustand des Hybridturms untere Seite des Stahlflansches, angrenzt. In einer weiteren bevorzugten Ausführung ist vorgesehen, dass der Betonkern Bewehrung umfasst. Insbesondere ist es bevorzugt, dass der Betonkern fluchtend mit einem axialen Ende des Stahl-Außenmantels und/oder fluchtend mit einem axialen Ende des Stahl-Innenmantels abschließt.

Insbesondere ist vorzugweise vorgesehen, dass der Betonkern einen Raum zwischen dem Stahl-Außenmantel und dem Stahl-Innenmantel im Wesentlichen vollständig ausfüllt.

Gemäß einer weiteren bevorzugten Ausführungsform ist vorgesehen, dass der Stahl-Außenmantel und/oder der Stahl-Innenmantel einstückig mit dem Stahlflansch ausgebildet ist bzw. sind. Ferner kann bevorzugt sein, dass der Stahl-Außenmantel und/oder der Stahl-Innenmantel an den Stahlflansch angeschweißt ist bzw. sind.

Eine einstückige Ausbildung wird hier insbesondere verstanden als die gleichzeitige Herstellung des Stahl-Außenmantels und/oder des Stahl-Innenmantels mit dem Stahlflansch, beispielsweise in einem Urformverfahren. Ferner vorzugsweise können der Stahl-Außenmantel und/oder der Stahl-Innenmantel mit dem Stahlflansch verbunden sein, beispielsweise stoffschlüssig und/oder formschlüssig und/oder kraftschlüssig. Insbesondere ist eine formschlüssige Verbindung in Form einer Schweißung bevorzugt.

Weitere vorteilhafte Ausführungsvarianten der zuvor beschriebenen Vorrichtung ergeben sich durch Kombination der hier erörterten bevorzugten Merkmale.

Gemäß einem weiteren Aspekt der Erfindung wird die eingangs genannte Aufgabe gelöst durch einen Hybrid-Turm für eine Windenergieanlage, umfassend mindestens einen Beton-Turmabschnitt und einen Stahl-Turmabschnitt, wobei zwischen dem Beton-Turmabschnitt und dem Stahl-Turmabschnitt ein Hybrid-Turmabschnitt nach mindestens einem der vorhergehenden Ansprüche angeordnet ist.

Gemäß einem weiteren Aspekt der Erfindung wird die eingangs genannte Aufgabe gelöst durch eine Windenergieanlage mit einem zuvor beschriebenen Hybrid-Turmabschnitt und/oder mit einem zuvor beschriebenen Hybrid-Turm.

Gemäß einem weiteren Aspekt der Erfindung wird die eingangs genannte Aufgabe durch das Verfahren zur Anordnung zwischen einem Beton-Turmabschnitt und einem Stahl-Turmabschnitt eines Hybrid-Turms für eine Windenergieanlage gelöst, indem durch das Bereitstellen eines Stahlflansches mit einer Vielzahl von ringförmig angeordneten Sacklöchern und einer Vielzahl von ringförmig angeordneten Durchgangslöchern, wobei die ringförmige Anordnung der Sacklöcher einen größeren Radius aufweist als die ringförmige Anordnung der Durchgangslöcher, wobei der Stahl-Außenmantel einen größeren Radius aufweist als die ringförmige Anordnung der Sacklöcher, Bereitstellen eines Stahl-Außenmantels, Anordnen des Stahlflansches und des Stahl-Außenmantels derart, dass eine im Betriebszustand eines Hybrid-Turms untere Seite des Stahlflanschs nach oben zeigt und der Stahl-Außenmantel von der im Betriebszustand eines Hybrid-Turms unteren Seite des Stahlflanschs nach oben ragt, Betonnieren des Betonkerns unter Verwendung des Stahl-Außenmantels als Schalung derart, dass der Betonkern an den Stahlflansch und den Stahl-Außenmantel angrenzt und eine radial innen liegende Seite des Betonkerns einen größeren Radius aufweist als die ringförmige Anordnung der Durchgangslöcher.

Das zuvor beschriebene Verfahren kann durch die folgenden Schritte fortgebildet werden: Bereitstellen eines Stahl-Innenmantels, und vorzugsweise Anordnen des Stahl-Innenmantels derart dass der Stahl-Innenmantel von der im Betriebszustand eines Hybrid-Turms unteren Seite des Stahlflanschs nach oben ragt, und/oder Anschweißen des Stahl-Außenmantels und/oder des Stahl-Innenmantels an den Stahlflansch, und/oder Einbringen von Bewehrung vor dem Betonieren des Betonkerns, und/oder Betonnieren des Betonkerns unter Verwendung des Stahls-Innenmantels als Schalung.

Gemäß einem weiteren Aspekt der Erfindung wird die eingangs genannte Aufgabe gelöst durch ein Verfahren zur Herstellung eines Hybrid-Turms für eine Windenergieanlage, das Verfahren umfassend: Bereitstellen mindestens eines Beton-Turmabschnitts, Anordnen eines Hybrid-Turmabschnitts nach einem der vorhergehenden Ansprüche auf dem Beton-Turmabschnitt, Anordnen eines Stahl-Turmabschnittes auf dem Hybrid-Turmabschnitt.

Das zuvor beschriebene Verfahren kann durch die folgenden Schritte fortgebildet werden: Befestigen des Stahl-Turmabschnitts an dem Hybrid-Turmabschnitt mittels der Vielzahl an ringförmig angeordneten Sacklöchern, und/oder Befestigen von Spanngliedern an der Vielzahl von ringförmig angeordneten Durchgangslöchern und vorzugsweise Spannen der Spannglieder.

Diese zuvor beschriebenen Verfahren und deren mögliche Fortbildungen weisen Merkmale bzw. Verfahrensschritte auf, die sie insbesondere dafür geeignet machen, für einen erfindungsgemäßen Hybrid-Turmabschnitt und seine Fortbildungen verwendet zu werden.

Zu den Vorteilen, Ausführungsvarianten und Ausführungsdetails dieser weiteren Aspekte der Erfindung und ihrer Fortbildungen wird auf die vorangegangene Beschreibung zu den entsprechenden Vorrichtungsmerkmalen verwiesen.

Bevorzugte Ausführungsbeispiele werden beispielhaft anhand der beiliegenden Figuren beschrieben. Es zeigen:
- Figur 1:: eine schematische Darstellung einer Windenergieanlage;
- Figur 2:: eine schematische Darstellung eines Ausschnitts einer längsgeschnittenen, dreidimensionalen Ansicht eines Ausführungsbeispiels eines Hybrid-Turmabschnitts;
- Figur 3:: eine schematische, nicht maßstabsgetreue Querschnittsansicht eines Ausführungsbeispiels eines Hybrid-Turms geschnitten durch einen Hybrid-Turmabschnitt mit schematischer Angabe verschiedener Radien;
- Figur 4:: einen schematischen Ablauf eines Ausführungsbeispiels eines Verfahrens zur Herstellung eines Hybrid-Turmabschnitts;
- Figur 5:: einen schematischen Ablauf eines Ausführungsbeispiels eines Verfahrens zur Herstellung eines Hybrid-Turms für eine Windenergieanlage.

In den Figuren sind gleiche oder im Wesentlichen funktionsgleiche Elemente mit den gleichen Bezugszeichen versehen. Allgemeine Beschreibungen beziehen sich in der Regel auf alle Ausführungsformen, sofern Unterschiede nicht explizit angegeben sind.

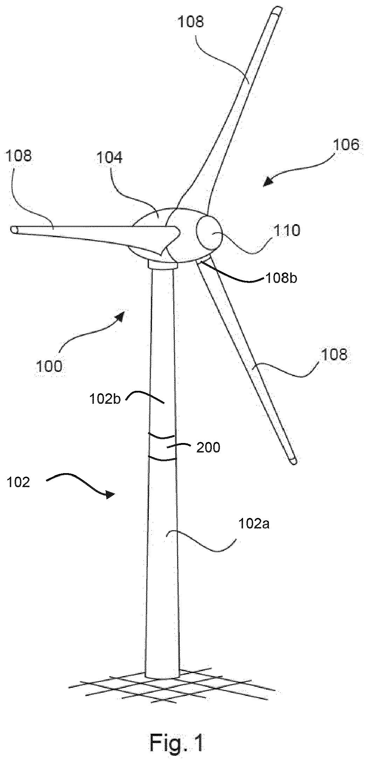

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 108b der jeweiligen Rotorblätter 108 verändert werden.

Der Turm 102 ist als Hybrid-Turm ausgebildet mit einem Beton-Turmabschnitt 102a und einem Stahl-Turmabschnitt 102b. Zwischen dem Beton-Turmabschnitt 102a und dem Stahl-Betonabschnitt 102b ist ein Hybrid-Turmabschnitt 200 angeordnet. In der Regel bilden mehrere ringförmige, übereinander angeordnete Beton-Turmabschnitte den BetonTeil des Hybrid-Turms. Ebenso bilden in der Regel mehrere ringförmige, übereinander angeordnete Stahl-Turmabschnitte den Stahl-Teil des Hybrid-Turms 102.

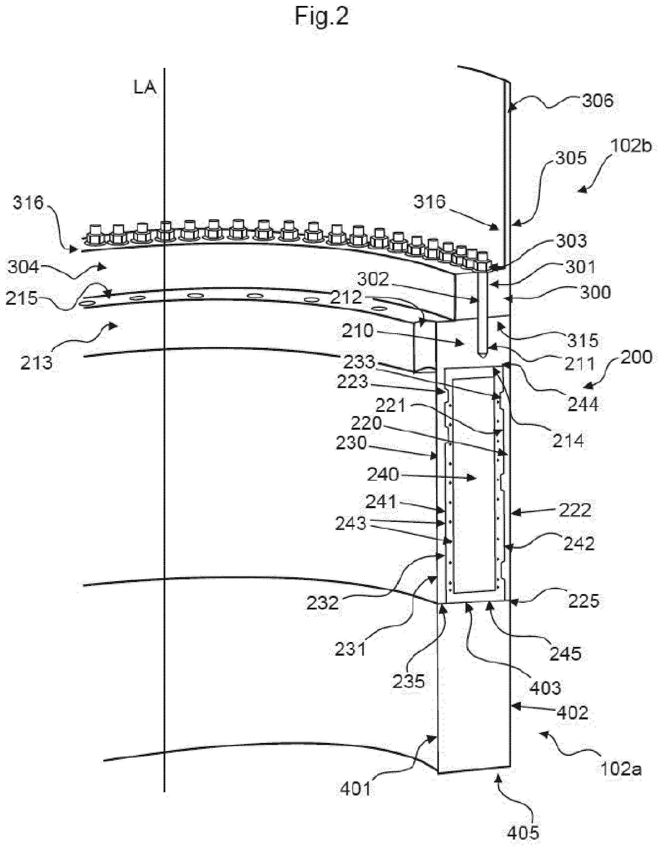

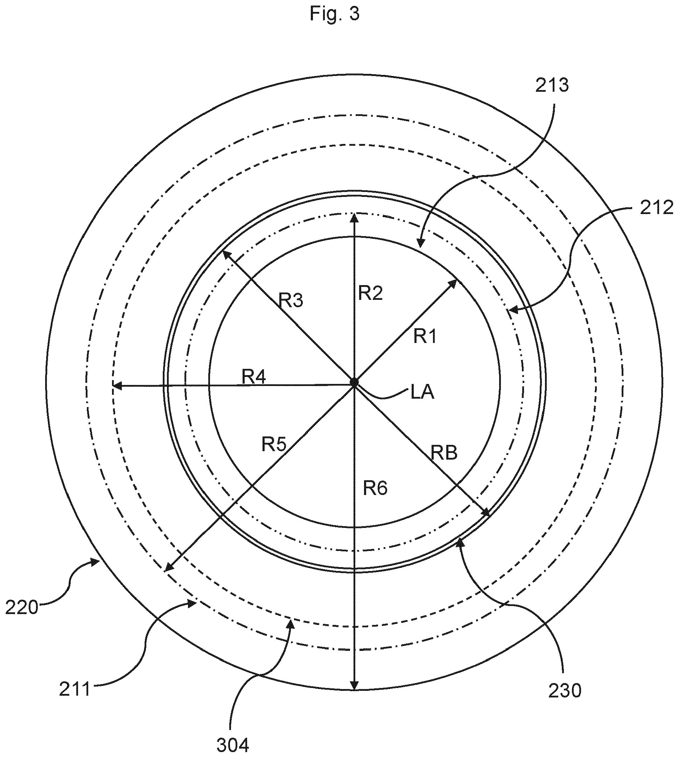

In den Figuren 2 und 3 ist der Hybrid-Turmabschnitt 200 in einem Ausführungsbeispiel näher dargestellt. Der Hybrid-Turmabschnitt 200 umfasst einen Stahlflansch 210, einen Stahl-Außenmantel 220, einen Stahl-Innenmantel 230 und einen Betonkern 240. Der Betonkern 240 weist eine Bewehrung 243 auf.

Der Hybrid-Turmabschnitt 200 ist auf einem im Betriebszustand darunter angeordneten Beton-Turmabschnitt 102a und einem im Betriebszustand darüber angeordneten Stahl-Turmabschnitt 102 b angeordnet.

Der Stahlflansch 210 weist eine Vielzahl von ringförmig angeordneten Sacklöchern 211 auf. Ferner weist der Stahlflansch 210 eine Vielzahl von ringförmig angeordneten Durchgangslöchern 212 auf. Ein Radius R5 der ringförmigen Anordnung der Sacklöcher 211 ist größer als ein Radius R2 der ringförmigen Anordnung der Durchgangslöcher 212. Ferner ist ein Radius R6 des Stahl-Außenmantels 220 größer als der Radius R5 der ringförmigen Anordnung der Sacklöcher 211. Der Radius R3 des Stahl-Innenmantels 230 ist größer als der Radius R2 der ringförmigen Anordnung der Durchgangslöcher 212 und kleiner als der Radius R5 der ringförmigen Anordnung der Sacklöcher 211. Der Radius R4 einer radial innen liegenden Seite 304 des Flanschabschnitts 300 des Stahl-Turmabschnitts 102b ist geringer als der Radius R5 der Vielzahl an ringförmig angeordneten Sacklöchern 211 des Stahlflansches 210 des Hybrid-Turmabschnitts und kleiner als der Radius R3 des Stahl-Innenmantels 230, der Radius R2 der ringförmigen Anordnung der Durchgangslöcher 211 und der Radius R1 der radial innen liegenden Seite 213 des Stahlflansches 210.

Die hier angegebenen Radien sind insbesondere bezogen auf eine Längsachse LA des Hybrid-Turms.

Die Radienangaben in Figur 3 sind schematisch dargestellt. Die Größenverhältnisse eines realen Hybrid-Turms einer Windenergieanlage können hiervon deutlich abweichen. Figur 3 dient vielmehr der Verdeutlichung des Prinzips. Die hier beschriebenen Radien beziehen sich insbesondere auf einen mittleren Radius des jeweils angegebenen Elements.

Wie in Figur 2 insbesondere zu erkennen ist, grenzt in einem Betriebszustand des Hybrid-Turms eine untere Seite 245 des Betonkerns 240 unmittelbar an eine obere Seite 403 des Beton-Turmabschnitts 102a an. Hierdurch kann der vorteilhafte Reibwert von Beton auf Beton ausgenutzt werden. Vorzugsweise fluchtet die im Betriebszustand untere Seite 245 des Betonkerns 240 mit dem im Betriebszustand unteren axialen Ende 225 des Stahl-Außenmantels 220 und mit dem im Betriebszustand unteren axialen Ende 235 des Stahl-Innenmantels 230. Der Betonkern 240 grenzt an den Stahlflansch 210, an den Stahl-Außenmantel 220 und an den Stahl-Innenmantel 230 an. Insbesondere grenzt eine im Betriebszustand obere Seite 244 des Betonkerns 240 an eine im Betriebszustand untere Seite 214 des Stahlflansches 210 an. Eine radial innen liegende Seite 241 des Betonkerns 240 grenzt an eine radial außenliegende Seite 232 des Stahl-Innenmantels 230 an. Eine radial außenliegende Seite 242 des Betonkerns 240 grenzt an eine radial innen liegende Seite 221 des Stahl-Außenmantels 220 an.

Eine radial außenliegende Seite des 222 des Stahl-Außenmantels 220 bildet vorzugsweise eine Außenwandung des Hybrid-Turms und ist ferner vorzugsweise fluchtend mit einer radial außen liegenden Seite 305 des Flanschabschnitts 300 des Stahl-Turmabschnitts 102b, insbesondere eines Stahl-Mantels 306 des Stahl-Turmabschnitts 102b, sowie einer radial außen liegenden Seite 402 des Beton-Turmabschnitts 102a ausgebildet. Ferner ist vorzugsweise eine radial innen liegende Seite 231 des Stahl-Innenmantels 230 im Betriebszustand fluchtend mit einer radial innen liegenden Seite 401 des Beton-Turmabschnitts 102a ausgebildet.

Eine im Betriebszustand untere Seite 315 des Flanschabschnitts 300 des Stahl-Turmabschnitts 102b liegt vorzugsweise auf einer im Betriebszustand oberen Seite 215 des Stahlflansches 210 auf.

Der Flanschabschnitt 300 des Stahl-Turmabschnitts 102b weist eine Vielzahl von ringförmig angeordneten Durchgangslöchern 301 auf, welche vorzugsweise fluchtend mit der Vielzahl der ringförmig angeordneten Sacklöchern 211 des Stahlflansches 210 des Hybrid-Turmabschnitts 200 angeordnet ist. In den Durchgangslöchern 301 des Flanschabschnitts 300 des Stahl-Turmabschnitts 102b und den Sacklöchern 211 des Stahlflansches 210 des Hybrid-Turmabschnitts 200 können vorzugsweise Befestigungselemente 302, beispielsweise in Form von Gewindebolzen, angeordnet und auf der im Betriebszustand oberen Seite 316 des Flanschabschnitts 300 des Stahl-Turmabschnitts 102b mit Muttern 303 befestigt werden. Auf diese Weise kann eine Befestigung zwischen dem Stahl-Turmabschnitt 102b und dem Hybrid-Turmabschnitt 200 hergestellt werden.

Die Vielzahl an ringförmig angeordneten Durchgangslöchern 212 des Stahlflansches 210 des Hybrid-Turmabschnitts 200 dient insbesondere dazu, externe Spannglieder (nicht dargestellt) aufzunehmen, die in einem Inneren des Hybrid-Turms verlaufen und den Beton-Turmabschnitt 102a zwischen dem Hybrid-Turmabschnitt 200 und einem Fundament des Hybrid-Turms vorspannen. Hierdurch wird ein Druck an der Stoßverbindung zwischen der im Betriebszustand unteren Seite 245 des Betonkerns und einer im Betriebszustand oberen Seite 403 des Beton-Turmabschnitts 102a aufgebaut.

Auf der radial innen liegenden Seite 221 des Stahl-Außenmantels 22 sind Vorsprünge in Form von Schubknaggen 223 ausgebildet. Ferner sind auf der radial außenliegenden Seite 232 des Stahl-Innenmantels 230 Vorsprünge in Form von Schubknaggen 233 ausgebildet. Im Querschnitt orthogonal zur Ringrichtung bzw. parallel zur Längsachse LA ist somit eine Grenzlinie zwischen dem Betonkern 240 und dem Stahl-Außenmantel 220 bzw. dem Stahl-Innenmantel 230 zahnschnittartig ausgebildet und es wird eine schubfeste Verzahnung zwischen dem Betonkern 240 und dem Stahl-Außenmantel und dem Stahl-Innenmantel 230 realisiert.

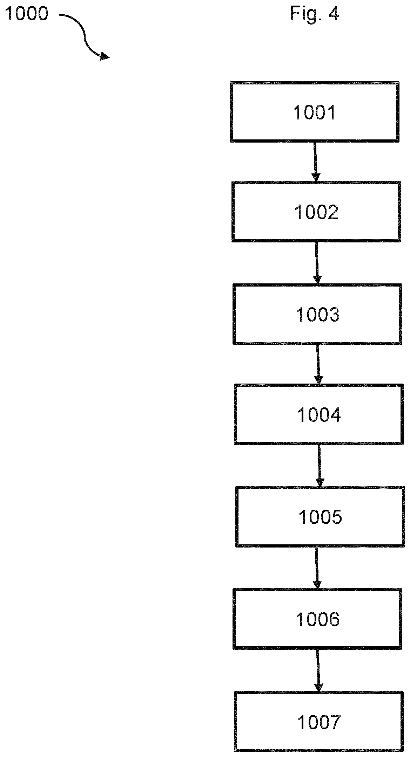

In dem in Figur 4 dargestellten Verfahren 1000 zur Herstellung eines Hybrid-Turmabschnitts werden die folgenden Schritte durchgeführt: Bereitstellen 1001 eines Stahlflansches mit einer Vielzahl von ringförmig angeordneten Sacklöchern und einer Vielzahl von ringförmig angeordneten Durchgangslöchern, Bereitstellen 1002 eines Stahl-Außenmantels, Bereitstellen 1003 eines Stahl-Innenmantels 230 und anordnen derart, dass der Stahl-Innenmantel von der im Betriebszustand des Hybrid-Turms unteren Seite 214 des Stahlflansches 210 nach oben ragt, Anschweißen 1004 des Stahl-Außenmantels 220 und/oder des Stahl-Innenmantels 230 an den Stahlflansch 210.

Weitere Schritte sind bevorzugt wie folgt: Anordnen 1005 des Stahlflansches und des Stahl-Außenmantels 220 derart, dass einem Betriebszustand des Hybrid-Turms untere Seite des Stahlflansches 210 nach oben zeigt und der Stahl-Außenmantel von der im Betriebszustand eines Hybrid-Turms unteren Seite des Stahlflansches nach oben ragt; Einbringen 1006 von Bewehrung 243 vor den Betonnieren 1007 des Betonkerns 240, Betonnieren 1004 des Betonkerns unter Verwendung des Stahl-Außenmantels und des Stahl-Innenmantels 230 als Schalung, insbesondere als verlorene Schalung. Dadurch grenzt der Betonkern 240 unmittelbar an den Stahlflansch 210 und den Stahl-Außenmantel 220 sowie den Stahl-Innenmantel 230 an.

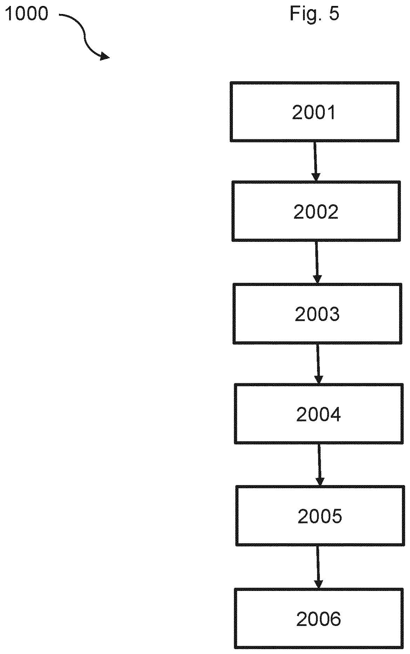

Das Verfahren 2000 zur Herstellung eines Hybrid-Turms für eine Windenergieanlage gemäß Figur 5 schließlich umfasst die Schritte Bereitstellen 2001 mindestens eines Beton-Turmabschnitts 102a, Anordnen 2002 eines Hybrid-Turmabschnitts 200 wie zuvor beschrieben auf dem Beton-Turmabschnitt 102a, Anordnen 2003 eines Stahl-Turmabschnitts 102b auf dem Hybrid-Turmabschnitt 200, Befestigen 2004 des Stahl-Turmabschnitts an dem Hybrid-Turmabschnitt mittels der Vielzahl an ringförmig angeordneten Sacklöchern 211 und vorzugsweise der Vielzahl an ringförmig angeordneten Durchgangslöchern 301 des Flanschabschnitts 300 des Stahl-Turmabschnitts 102b sowie mittels Befestigungselementen 302 und Muttern 303, Befestigen 2005 von Spanngliedern an der Vielzahl von ringförmig angeordneten Durchgangslöchern 212 sowie vorzugsweise Spannen der Spannglieder.

Mit dem hier beschriebenen Hybrid-Turmabschnitt wird eine kostengünstige und effiziente Möglichkeit bereitgestellt, in einem Hybrid-Turm den Beton-Turmabschnitt mit dem Stahl-Turmabschnitt zuverlässig zu verbinden und gleichzeitig Gewicht und Kosten einzusparen.

Durch die schubfeste Verzahnung über Vorsprünge in Form von Schubknaggen auf den einander zugewandten Seiten des Stahl-Innenmantels und des Stahl-Außenmantels mit dem den Zwischenraum zwischen dem Stahl-Außenmantel und dem Stahl-Innenmantel aus fehlenden Betonkern, wird eine effiziente Kraftübertragung erzielt.

### Bezugszeichen

- 1: Windenergieanlage
- 102: Hybrid-Turm
- 102a: Beton-Turmabschnitt
- 102b: Stahl-Turmabschnitt
- 200: Hybrid-Turmabschnitt
- 210: Stahlflansch
- 211: Sacklöchern
- 212: Durchgangslöcher
- 213: radial innen liegende Seite des Stahlflansches
- 214: im Betriebszustand untere Seite des Stahlflansches
- 215: im Betriebszustand obere Seite des Stahlflansches
- 220: Stahl-Außenmantel
- 221: radial innen liegenden Seite des Stahl-Außenmantels
- 222: radial außen liegenden Seite des Stahl-Außenmantels
- 223: Schubknaggen auf der radial innen liegenden Seite des Stahl-Außenmantels
- 225: im Betriebszustand unteres axiales Ende des Stahl-Außenmantels
- 230: Stahl-Innenmantel
- 231: radial innen liegenden Seite des Stahl-Innenmantels
- 232: radial außen liegenden Seite des Stahl-Innenmantels
- 233: Schubknaggen auf der radial außen liegenden Seite des Stahl-Innenmantels
- 235: im Betriebszustand unteres axiales Ende des Stahl-Innenmantels
- 240: Betonkern,
- 241: radial innen liegende Seite des Betonkerns
- 242: radial außen liegende Seite des Betonkerns
- 243: Bewehrung
- 244: im Betriebszustand obere Seite des Betonkerns
- 245: im Betriebszustand untere Seite des Betonkerns
- 300: Flanschabschnitt des Stahl-Turmabschnitts
- 301: Durchgangslöcher im Flanschabschnitt des Stahl-Turmabschnitts
- 302: Befestigungselemente
- 303: Muttern
- 304: radial innen liegende Seite des Flanschabschnitts des Stahl-Turmabschnitts
- 305: radial außen liegende Seite des Flanschabschnitts des Stahl-Turmabschnitts
- 306: Stahl-Mantel des Stahl-Turmabschnitts
- 315: im Betriebszustand untere Seite des Flanschabschnitts des Stahl-Turmabschnitts
- 316: im Betriebszustand obere Seite des Flanschabschnitts des Stahl-Turmabschnitts
- 401: radial innen liegende Seite des Beton-Turmabschnitts
- 402: radial außen liegende Seite des Beton-Turmabschnitts
- 403: im Betriebszustand obere Seite des Beton-Turmabschnitts
- 405: im Betriebszustand untere Seite des Beton-Turmabschnitts
- 1000: Verfahren zur Herstellung eines Hybrid-Turmabschnitts
- 1001: Bereitstellen eines Stahlflansches
- 1002: Bereitstellen eines Stahl-Außenmantels
- 1003: Bereitstellen eines Stahl-Innenmantels
- 1004: Anschweißen des Stahl-Außenmantels und des Stahl-Innenmantels an den Stahlflansch
- 1005: Anordnen des Stahlflansches und des Stahl-Außenmantels
- 1006: Einbringen von Bewehrung
- 1007: Betonnieren des Betonkerns
- 2000: Verfahren zur Herstellung eines Hybrid-Turms für eine Windenergieanlage
- 2001: Bereitstellen mindestens eines Beton-Turmabschnitts
- 2002: Anordnen eines Hybrid-Turmabschnitts auf dem Beton-Turmabschnitt
- 2003: Anordnen eines Stahl-Turmabschnitts auf dem Hybrid-Turmabschnitt
- 2004: Befestigen des Stahl-Turmabschnitts an dem Hybrid-Turmabschnitt
- 2005: Befestigen von Spannglieder an der Vielzahl von ringförmig angeordneten Durchgangslöchern
- 2006: Spannen der Spannglieder
- LA: Längsachse
- R1: Radius der radial innen liegende Seite des Stahlflansches
- R2: Radius der ringförmigen Anordnung der Durchgangslöcher
- R3: Radius des Stahl-Innenmantels
- R4: Radius der radial innen liegenden Seite des Flanschabschnitts des Stahl-Turmabschnitts
- R5: Radius der ringförmigen Anordnung der Sacklöcher
- R6: Radius des Stahl-Außenmantels
- RB: Radius der radial innen liegende Seite des Betonkerns

## Patentansprüche

1. Hybrid-Turmabschnitt (200) zur Anordnung zwischen einem Beton-Turmabschnitt (102a) und einem Stahl-Turmabschnitt (102b) eines Hybrid-Turms (102) für eine Windenergieanlage (1), der Hybrid-Turmabschnitt (102a) umfassend:
- einen Stahlflansch (210) mit einer Vielzahl von ringförmig angeordneten Sacklöchern (211) und einer Vielzahl von ringförmig angeordneten Durchgangslöchern (212),
- einen Stahl-Außenmantel (220), und
- einen Betonkern (240),
- wobei die ringförmige Anordnung der Sacklöcher (R5) einen größeren Radius aufweist als die ringförmige Anordnung der Durchgangslöcher (212),
- wobei der Stahl-Außenmantel (220) einen größeren Radius (R6) aufweist als die ringförmige Anordnung der Sacklöcher (211),
- wobei der Betonkern (240) an den Stahlflansch (210) und den Stahl-Außenmantel (220) angrenzt,
- wobei eine radial innen liegende Seite des Betonkerns (241) einen größeren Radius (RB) aufweist als die ringförmige Anordnung der Durchgangslöcher (212).

2. Hybrid-Turmabschnitt (200) nach dem vorhergehenden Anspruch,
**gekennzeichnet durch** einen Stahl-Innenmantel (230), wobei der Stahl-Innenmantel (230) einen Radius (R3) aufweist, der größer ist als der Radius (R2) der ringförmigen Anordnung der Durchgangslöcher und kleiner ist als der Radius (R5) der ringförmigen Anordnung der Sacklöcher (211).

3. Hybrid-Turmabschnitt (200) nach mindestens einem der vorhergehenden Ansprüche,
**dadurch gekennzeichnet, dass** eine radial innen liegende Seite (221) des Stahl-Außenmantels (220) und/oder eine radial außenliegende Seite (232) des Stahl-Innenmantels (230) eine konturierte Oberfläche und/oder eine, zwei oder mehrere Vorsprünge und/oder Vertiefungen und/oder Schubknaggen (232, 233) aufweisen.

4. Hybrid-Turmabschnitt (200) nach mindestens einem der vorhergehenden Ansprüche,
- **dadurch gekennzeichnet, dass** der Stahl-Außenmantel (220) und/oder der Stahl-Innenmantel (230) und/oder der Betonkern (240) eine axiale Höhe aufweisen, die um ein Vielfaches größer ist als eine axiale Höhe des Stahlflansches (210), und/oder
- **dadurch gekennzeichnet, dass** der Stahl-Außenmantel (220) und/oder der Stahl-Innenmantel (230) und/oder der Betonkern (240) eine axiale Höhe von 1-2m aufweisen, und/oder
- **dadurch gekennzeichnet, dass** der Stahl-Außenmantel (220) und/oder der Stahl-Innenmantel (230) und/oder der Betonkern (240) eine radiale Dicke von 1-20cm aufweisen.

5. Hybrid-Turmabschnitt (200) nach mindestens einem der vorhergehenden Ansprüche,
- **dadurch gekennzeichnet, dass** der Betonkern (240) direkt an den Stahl-Außenmantel (220), insbesondere direkt an die radial innen liegende Seite (221) des Stahl-Außenmantels, angrenzt, und/oder
- **dadurch gekennzeichnet, dass** der Betonkern (240) direkt an den Stahl-Innenmantel (230), insbesondere direkt an die radial außenliegende Seite (232) des Stahl-Innenmantels, angrenzt, und/oder
- **dadurch gekennzeichnet, dass** der Betonkern (240) direkt an den Stahlflansch (210), insbesondere direkt an eine im Betriebszustand des Hybrid-Turms (102) untere Seite (214) des Stahlflansches (210), angrenzt und/oder
- **dadurch gekennzeichnet, dass** der Betonkern (240) Bewehrung umfasst, und/oder
- **dadurch gekennzeichnet, dass** der Betonkern (240) fluchtend mit einem axialen Ende (225) des Stahl-Außenmantels (220) und/oder fluchtend mit einem axialen Ende (235) des Stahl-Innenmantels (230) abschließt.

6. Hybrid-Turmabschnitt (200) nach mindestens einem der vorhergehenden Ansprüche 2-5,
**dadurch gekennzeichnet, dass** der Betonkern (240) einen Raum zwischen dem Stahl-Außenmantel (220) und dem Stahl-Innenmantel (230) im Wesentlichen vollständig ausfüllt.

7. Hybrid-Turmabschnitt (200) nach mindestens einem der vorhergehenden Ansprüche 2-6,
- **dadurch gekennzeichnet, dass** der Stahl-Außenmantel (220) und/oder der Stahl-Innenmantel (230) einstückig mit dem Stahlflansch (210) ausgebildet ist bzw. sind, und/oder
- **dadurch gekennzeichnet, dass** der Stahl-Außenmantel (220) und/oder der Stahl-Innenmantel (230) an den Stahlflansch (210) angeschweißt ist bzw. sind.

8. Hybrid-Turm (102) für eine Windenergieanlage (1), umfassend mindestens einen Beton-Turmabschnitt (102a) und einen Stahl-Turmabschnitt (102b), wobei zwischen dem Beton-Turmabschnitt (102a) und dem Stahl-Turmabschnitt (102b) ein Hybrid-Turmabschnitt (200) nach mindestens einem der vorhergehenden Ansprüche angeordnet ist.

9. Windenergieanlage (1) mit einem Hybrid-Turmabschnitt (200) nach mindestens einem der vorhergehenden Ansprüche 1-7 und/oder mit einem Hybrid-Turm (102) nach dem vorhergehenden Anspruch.

10. Verfahren (1000) zur Herstellung eines Hybrid-Turmabschnitts (200) zur Anordnung zwischen einem Beton-Turmabschnitt (102a) und einem Stahl-Turmabschnitt (102b) eines Hybrid-Turms (102) für eine Windenergieanlage (1), das Verfahren umfassend:
- Bereitstellen (1001) eines Stahlflansches (210) mit einer Vielzahl von ringförmig angeordneten Sacklöchern (211) und einer Vielzahl von ringförmig angeordneten Durchgangslöchern (212),
- wobei die ringförmige Anordnung der Sacklöcher (211) einen größeren Radius aufweist als die ringförmige Anordnung der Durchgangslöcher (212),
- Bereitstellen (1002) eines Stahl-Außenmantels (220),
- wobei der Stahl-Außenmantel (220) einen größeren Radius aufweist als die ringförmige Anordnung der Sacklöcher (211),
- Anordnen (1005) des Stahlflansches (210) und des Stahl-Außenmantels (220) derart, dass eine im Betriebszustand eines Hybrid-Turms (102) untere Seite des Stahlflanschs (210) nach oben zeigt und der Stahl-Außenmantel (220) von der im Betriebszustand eines Hybrid-Turms (102) unteren Seite (214) des Stahlflanschs (210) nach oben ragt,
- Betonnieren (1007) des Betonkerns (240) unter Verwendung des Stahl-Außenmantels (220) als Schalung derart, dass der Betonkern (240) an den Stahlflansch (210) und den Stahl-Außenmantel (220) angrenzt und eine radial innen liegende Seite des Betonkerns (241) einen größeren Radius (RB) aufweist als die ringförmige Anordnung der Durchgangslöcher (212).

11. Verfahren nach dem vorhergehenden Anspruch 10
**gekennzeichnet durch**:
- Bereitstellen (1003) eines Stahl-Innenmantels (230), und vorzugsweise Anordnen des Stahl-Innenmantels (230) derart, dass der Stahl- Innenmantel (230) von der im Betriebszustand eines Hybrid-Turms (102) unteren Seite (214) des Stahlflanschs (210) nach oben ragt, und/oder
- Anschweißen (1004) des Stahl-Außenmantels (220) und/oder des Stahl-Innenmantels (230) an den Stahlflansch (210), und/oder
- Einbringen (1006) von Bewehrung (243) vor dem Betonieren des Betonkerns (240), und/oder
- Betonnieren (1007) des Betonkerns (240) unter Verwendung des Stahl-Innenmantels (230) als Schalung.

12. Verfahren (2000) zur Herstellung eines Hybrid-Turms (102) für eine Windenergieanlage (1, 2000), das Verfahren umfassend:
- Bereitstellen (2001) mindestens eines Beton-Turmabschnitts (102a),
- Anordnen (2002) eines Hybrid-Turmabschnitts (200) nach einem der vorhergehenden Ansprüche 1-7 auf dem Beton-Turmabschnitt (102a),
- Anordnen (2003) eines Stahl-Turmabschnitts (102b) auf dem Hybrid-Turmabschnitt (200).

13. Verfahren nach dem vorhergehenden Anspruch 12
**gekennzeichnet durch**:
- Befestigen (2004) des Stahl-Turmabschnitts (102b) an dem Hybrid-Turmabschnitt (200) mittels der Vielzahl an ringförmig angeordneten Sacklöchern (211), und/oder
- Befestigen (2005) von Spanngliedern an der Vielzahl von ringförmig angeordneten Durchgangslöchern (212) und vorzugsweise Spannen (2006)der Spannglieder.

## Claims

1. A hybrid tower section (200) for arrangement between a concrete tower section (102a) and a steel tower section (102b) of a hybrid tower (102) for a wind power installation (1), the hybrid tower section (102a) comprising:
- a steel flange (210) having a multiplicity of annularly arranged blind holes (211) and having a multiplicity of annularly arranged passage holes (212),
- a steel outer casing (220), and
- a concrete core (240),
- wherein the annular arrangement of the blind holes has a larger radius (R5) than the annular arrangement of the passage holes (212),
- wherein the steel outer casing (220) has a larger radius (R6) than the annular arrangement of the blind holes (211),
- wherein the concrete core (240) adjoins the steel flange (210) and the steel outer casing (220),
- wherein a radially inner side (241) of the concrete core has a larger radius (RB) than the annular arrangement of the passage holes (212).

2. The hybrid tower section (200) as claimed in the preceding claim,
**characterized by** a steel inner casing (230), wherein the steel inner casing (230) has a radius (R3) which is larger than the radius (R2) of the annular arrangement of the passage holes and is smaller than the radius (R5) of the annular arrangement of the blind holes (211).

3. The hybrid tower section (200) as claimed in at least either of the preceding claims,
**characterized in that** a radially inner side (221) of the steel outer casing (220) and/or a radially outer side (232) of the steel inner casing (230) have/has a contoured surface and/or one, two or more projections and/or depressions and/or shear cleats (232, 233).

4. The hybrid tower section (200) as claimed in at least either of the preceding claims,
- **characterized in that** the steel outer casing (220) and/or the steel inner casing (230) and/or the concrete core (240) have/has an axial height which is several times larger than an axial height of the steel flange (210), and/or
- **characterized in that** the steel outer casing (220) and/or the steel inner casing (230) and/or the concrete core (240) have/has an axial height of 1-2 m, and/or
- **characterized in that** the steel outer casing (220) and/or the steel inner casing (230) and/or the concrete core (240) have/has a radial thickness of 1-20 cm.

5. The hybrid tower section (200) as claimed in at least either of the preceding claims,
- **characterized in that** the concrete core (240) directly adjoins the steel outer casing (220), in particular directly adjoins the radially inner side (221) of the steel outer casing, and/or
- **characterized in that** the concrete core (240) directly adjoins the steel inner casing (230), in particular directly adjoins the radially outer side (232) of the steel inner casing, and/or
- **characterized in that** the concrete core (240) directly adjoins the steel flange (210), in particular directly adjoins a side (214) of the steel flange (210) that is at the bottom in the operating state of the hybrid tower (102), and/or
- **characterized in that** the concrete core (240) comprises reinforcement, and/or
- **characterized in that** the concrete core (240) terminates in alignment with an axial end (225) of the steel outer casing (220) and/or in alignment with an axial end (235) of the steel inner casing (230).

6. The hybrid tower section (200) as claimed in at least one of the preceding claims 2-5,
**characterized in that** the concrete core (240) substantially completely fills a space between the steel outer casing (220) and the steel inner casing (230).

7. The hybrid tower section (200) as claimed in at least one of the preceding claims 2-6,
- **characterized in that** the steel outer casing (220) and/or the steel inner casing (230) are/is formed in one piece with the steel flange (210), and/or
- **characterized in that** the steel outer casing (220) and/or the steel inner casing (230) are/is welded to the steel flange (210).

8. A hybrid tower (102) for a wind power installation (1), comprising at least one concrete tower section (102a) and one steel tower section (102b), wherein a hybrid tower section (200) as claimed in at least one of the preceding claims is arranged between the concrete tower section (102a) and the steel tower section (102b).

9. A wind power installation (1) having a hybrid tower section (200) as claimed in at least one of the preceding claims 1-7 and/or having a hybrid tower (102) as claimed in the preceding claim.

10. A method (1000) for producing a hybrid tower section (200) for arrangement between a concrete tower section (102a) and a steel tower section (102b) of a hybrid tower (102) for a wind power installation (1), the method comprising:
- providing (1001) a steel flange (210) having a multiplicity of annularly arranged blind holes (211) and having a multiplicity of annularly arranged passage holes (212),
- wherein the annular arrangement of the blind holes (211) has a larger radius than the annular arrangement of the passage holes (212),
- providing (1002) a steel outer casing (220),
- wherein the steel outer casing (220) has a larger radius than the annular arrangement of the blind holes (211),
- arranging (1005) the steel flange (210) and the steel outer casing (220) in such a way that a side of the steel flange (210) that is at the bottom in the operating state of a hybrid tower (102) faces upward and the steel outer casing (220) projects upward from that side (214) of the steel flange (210) which is at the bottom in the operating state of a hybrid tower (102),
- making (1007) the concrete core (240) using the steel outer casing (220) as a formwork in such a way that the concrete core (240) adjoins the steel flange (210) and the steel outer casing (220) and a radially inner side (241) of the concrete core has a larger radius (RB) than the annular arrangement of the passage holes (212).

11. The method as claimed in the preceding claim 10,
**characterized by**:
- providing (1003) a steel inner casing (230), and preferably arranging the steel inner casing (230) in such a way that the steel inner casing (230) projects upward from that side (214) of the steel flange (210) which is at the bottom in the operating state of a hybrid tower (102), and/or
- welding (1004) the steel outer casing (220) and/or the steel inner casing (230) to the steel flange (210), and/or
- introducing (1006) reinforcement (243) prior to concreting the concrete core (240), and/or
- making (1007) the concrete core (240) using the steel inner casing (230) as a formwork.

12. A method (2000) for producing a hybrid tower (102) for a wind power installation (1, 2000), the method comprising:
- providing (2001) at least one concrete tower section (102a),
- arranging (2002) a hybrid tower section (200) as claimed in one of the preceding claims 1-7 on the concrete tower section (102a),
- arranging (2003) a steel tower section (102b) on the hybrid tower section (200).

13. The method as claimed in the preceding claim 12 **characterized by**:
- fastening (2004) the steel tower section (102b) to the hybrid tower section (200) by means of the multiplicity of annularly arranged blind holes (211), and/or
- fastening (2005) tensioning members at the multiplicity of annularly arranged passage holes (212) and preferably tensioning (2006) the tensioning members.

## Revendications

1. Segment de mât hybride (200) destiné à être disposé entre un segment de mât en béton (102a) et un segment de mât en acier (102b) d'un mât hybride (102) pour une éolienne (1), le segment de mât hybride (102a) comprenant :
- une bride en acier (210) avec une pluralité de trous borgnes (211) disposés en forme d'anneau et une pluralité de trous de passage (212) disposés en forme d'anneau,
- une enveloppe extérieure en acier (220), et
- une partie centrale en béton (240),
- dans lequel la disposition en forme d'anneau des trous borgnes (R5) présente un rayon plus grand que la disposition en forme d'anneau des trous de passage (212),
- dans lequel l'enveloppe extérieure en acier (220) présente un rayon plus grand (R6) que celui de la disposition en forme d'anneau des trous borgnes (211),
- dans lequel la partie centrale en béton (240) jouxte la bride en acier (210) et l'enveloppe extérieure en acier (220),
- dans lequel un côté situé à l'intérieur radialement de la partie centrale en béton (241) présente un rayon plus grand (RB) que celui de la disposition en forme d'anneau des trous de passage (212).

2. Segment de mât hybride (200) selon la revendication précédente,
**caractérisé par** une enveloppe intérieure en acier (230), dans lequel l'enveloppe intérieure en acier (230) présente un rayon (R3), qui est plus grand que le rayon (R2) de la disposition en forme d'anneau des trous de passage et est inférieur au rayon (R5) de la disposition en forme d'anneau des trous borgnes (211).

3. Segment de mât hybride (200) selon au moins l'une quelconque des revendications précédentes,
**caractérisé en ce qu'**un côté situé radialement à l'intérieur (221) de l'enveloppe extérieure en acier (220) et/ou un côté situé radialement à l'extérieur (232) de l'enveloppe intérieure en acier (230) présentent une surface contourée et/ou une, deux ou plusieurs parties faisant saillie et/ou renfoncements et/ou taquets de poussée (232, 233).

4. Segment de mât hybride (200) selon au moins l'une quelconque des revendications précédentes,
- **caractérisé en ce que** l'enveloppe extérieure en acier (220) et/ou l'enveloppe intérieure en acier (230) et/ou la partie centrale en béton (240) présentent une hauteur axiale qui est plus grande d'un multiple qu'une hauteur axiale de la bride en acier (210), et/ou
- **caractérisé en ce que** l'enveloppe extérieure en acier (220) et/ou l'enveloppe intérieure en acier (230) et/ou la partie centrale en béton (240) présentent une hauteur axiale de 1-2 m, et/ou
- **caractérisé en ce que** l'enveloppe extérieure en acier (220) et/ou l'enveloppe intérieure en acier (230) et/ou la partie centrale en béton (240) présentent une épaisseur radiale de 1-20 cm.

5. Segment de mât hybride (200) selon au moins l'une quelconque des revendications précédentes,
- **caractérisé en ce que** la partie centrale en béton (240) jouxte directement l'enveloppe extérieure en acier (220), en particulier directement le côté situé à l'intérieur radialement (221) de l'enveloppe extérieure en acier, et/ou
- **caractérisé en ce que** la partie centrale en béton (240) jouxte directement l'enveloppe intérieure en acier (230), en particulier directement le côté situé à l'extérieur radialement (232) de l'enveloppe intérieure en acier, et/ou
- **caractérisé en ce que** la partie centrale en béton (240) jouxte directement la bride en acier (210), en particulier directement un côté inférieur (214) dans l'état de fonctionnement du mât hybride (102) de la bride en acier (210), et/ou
- **caractérisé en ce que** la partie centrale en béton (240) comprend une armature, et/ou
- **caractérisé en ce que** la partie centrale en béton (240) se termine en affleurement avec une extrémité axiale (225) de l'enveloppe extérieure en acier (220) et/ou en affleurement avec une extrémité axiale (235) de l'enveloppe intérieure en acier (230).

6. Segment de mât hybride (200) selon au moins l'une quelconque des revendications précédentes 2 - 5,
**caractérisé en ce que** la partie centrale en béton (240) remplit sensiblement totalement un espace entre l'enveloppe extérieure en acier (220) et l'enveloppe intérieure en acier (230).

7. Segment de mât hybride (200) selon au moins l'une quelconque des revendications précédentes 2 - 6,
- **caractérisé en ce que** l'enveloppe extérieure en acier (220) et/ou l'enveloppe intérieure en acier (230) sont réalisées d'un seul tenant avec la bride en acier (210), et/ou
- **caractérisé en ce que** l'enveloppe extérieure en acier (220) et/ou l'enveloppe intérieure en acier (230) sont soudées à la bride en acier (210).

8. Mât hybride (102) pour une éolienne (1), comprenant au moins un segment de mât en béton (102a) et un segment de mât en acier (102b), dans lequel un segment de mât hybride (200) selon au moins l'une quelconque des revendications précédentes est disposé entre le segment de mât en béton (102a) et le segment de mât en acier (102b).

9. Eolienne (1) avec un segment de mât hybride (200) selon au moins l'une quelconque des revendications précédentes 1 - 7 et/ou avec un mât hybride (102) selon la revendication précédente.

10. Procédé (1000) de fabrication d'un segment de mât hybride (200) destiné à être disposé entre un segment de mât en béton (102a) et un segment de mât en acier (102b) d'un mât hybride (102) pour une éolienne (1), le procédé comprenant :
- la mise à disposition (1001) d'une bride en acier (210) avec une pluralité de trous borgnes (211) disposés en forme d'anneau et une pluralité de trous de passage (212) disposés en forme d'anneau,
- dans lequel la disposition en forme d'anneau des trous borgnes (211) présente un rayon plus grand que la disposition en forme d'anneau des trous de passage (212),
- la mise à disposition (1002) d'une enveloppe extérieure en acier (220),
- dans lequel l'enveloppe extérieure en acier (220) présente un rayon plus grand que la disposition annulaire des trous borgnes (211),
- la disposition (1005) de la bride en acier (210) et de l'enveloppe extérieure en acier (220) de telle manière qu'un côté inférieur, dans l'état de fonctionnement d'un mât hybride (102), de la bride en acier (210) pointe vers le haut et l'enveloppe extérieure en acier (220) dépasse vers le bas du côté inférieur (214), dans l'état de fonctionnement d'un mât hybride (102), de la bride en acier (210),
- le bétonnage (1007) de la partie centrale en béton (240) en utilisant l'enveloppe extérieure en acier (220) en tant que coffrage de telle manière que la partie centrale en béton (240) jouxte la bride en acier (210) et l'enveloppe extérieure en acier (220) et un côté situé à l'intérieur radialement de la partie centrale en béton (241) présente un rayon plus grand (RB) que la disposition annulaire des trous de passage (212).

11. Procédé selon la revendication précédente 10, **caractérisé par** :
- la mise à disposition (1003) d'une enveloppe intérieure en acier (230), et de préférence la disposition de l'enveloppe intérieure en acier (230) de telle manière que l'enveloppe intérieure en acier (230) dépasse vers le haut du côté inférieur (214), dans l'état de fonctionnement d'un mât hybride (102), de la bride en acier (210), et/ou
- le soudage (1004) de l'enveloppe extérieure en acier (220) et/ou de l'enveloppe intérieure en acier (230) contre la bride en acier (210), et/ou
- l'introduction (1006) d'une armature (243) avant le bétonnage de la partie centrale en béton (240), et/ou
- le bétonnage (1007) de la partie centrale en béton (240) en utilisant l'enveloppe intérieure en acier (230) en tant que coffrage.

12. Procédé (2000) de fabrication d'un mât hybride (102) pour une éolienne (1, 2000), le procédé comprenant :
- la mise à disposition (2001) d'au moins un segment de mât en béton (102a),
- la disposition (2002) d'un segment de mât hybride (200) selon l'une quelconque des revendications précédentes 1 - 7 sur le segment de mât en béton (102a),
- la disposition (2003) d'un segment de mât en acier (102b) sur le segment de mât hybride (200).

13. Procédé selon la revendication précédente 12, **caractérisé par** :
- la fixation (2004) du segment de mât en acier (102b) sur le segment de mât hybride (200) au moyen de la pluralité de trous borgnes (211) disposés en forme d'anneau, et/ou
- la fixation (2005) d'organes de serrage sur la pluralité de trous de passage (212) disposés en forme d'anneau et de préférence de serrage (2006) des organes de serrage.
